# EUROPEAN PATENT SPECIFICATION

(11) **EP 4 115 695 B1**
(45) Date of publication and mention of the grant of the patent: **28.05.2025**
(21) Application number: 21774697.3
(22) Date of filing: 24.03.2021
(51) Int. Cl.: H04W 76/32, H04W 76/38, H04W 60/04, H04W 88/14, H04W 92/04, H04W 76/11

(54) **SYSTEM AND METHOD FOR OPTIMIZING PDN SYNCHRONIZATION BETWEEN USER EQUIPMENT AND NETWORK**
SYSTEM UND VERFAHREN ZUR OPTIMIERUNG DER PDN-SYNCHRONISATION ZWISCHEN BENUTZERGERÄT UND NETZWERK
SYSTÈME ET PROCÉDÉ D'OPTIMISATION DE SYNCHRONISATION DE PDN ENTRE UN ÉQUIPEMENT UTILISATEUR ET UN RÉSEAU

(30) Priority: 26.03.2020 IN 202041013146
(43) Date of publication of application: 11.01.2023
(73) Proprietor: GUANGDONG OPPO MOBILE TELECOMMUNICATIONS CORP., LTD., Dongguan, Guangdong 523860 (CN)
(72) Inventor: MATHUR, Ashish, Hyderabad, Telangana 500081 (IN); BODAPATI, Naveen, Hyderabad, Telangana 500081 (IN)
(74) Representative: Mewburn Ellis LLP
(86) International application number: PCT/CN2021/082788
(87) International publication number: WO 2021/190576

(56) References cited:
- CN-A- 101 902 732
- CN-A- 101 984 718
- CN-A- 102 428 742
- US-A1- 2019 313 478
- "3rd Generation Partnership Project; Technical Specification Group Core Network and Terminals; Non-Access-Stratum (NAS) protocol for 5G System (5GS); Stage 3 (Release 16)", 25 March 2020 (2020-03-25), XP052306815, Retrieved from the Internet <URL:https://ftp.3gpp.org/tsg_ct/WG1_mm-cc-sm_ex-CN1/TSGC1_122e/draftspecs_afterCT87e/draft_24501-g40-v4.zip draft_24501-g40-v4.doc> [retrieved on 20200325]
- MEDIATEK INC: "Correction on PTI error handling of the UE", 3GPP DRAFT; C1-192388_24.501 [R16] PTI HANDLING OF UE, 2 April 2019 (2019-04-02), Xi an, P.R. of China, pages 1 - 6, XP051705571

## Description

### FIELD

The present disclosure generally relates to wireless network and more particularly to a system and method for optimizing PDN synchronization between a user equipment and a network entity.

### BACKGROUND

The following description of related art is intended to provide background information pertaining to the field of the disclosure. This section may include certain aspects of the art that may be related to various features of the present disclosure. However, it should be appreciated that this section be used only to enhance the understanding of the reader with respect to the present disclosure, and not as admissions of prior art.

Wireless communication system has been evolved to a great extent over the past few years. With the implementation of new techniques and technologies there also arise some challenges, for instance, sometimes a user equipment is not able to use the data services due to PDN state mismatch between said user equipment and 5G/LTE network. Both user equipment and network enters into an un-synchronized state due to which the user equipment is not able to use any data services until user performs Airplane Mode ON/OFF or Switches OFF the user equipment.

As per 3GPP specifications for a LTE network, if a user does not wish to further continue the data service, the user equipment typically sends a request for disconnection from the data service PDN by sending PDN disconnection request to the network/ Mobility Management Entity (MME). In order to disconnect from the data service, the user equipment shall send PDN DISCONNECT REQUEST message to the network including the EPS bearer identity of the bearer associated with the PDN which needs to be disconnected. Also the user equipment starts a timer and enter the state PROCEDURE TRANSACTION PENDING state.

If the network/MME accepts the PDN DISCONNECT REQUEST message from the user equipment/UE, the network shall initiate the EPS bearer context deactivation procedure by sending DEACTIVATE EPS BEARER CONTEXT REQUEST, starts the timer T3495 and enter the state BEARER CONTEXT INACTIVE PENDING.

In an instance if network does not accept the PDN DISCONNECT REQUEST message from UE, the Network shall send a PDN DISCONNECT REJECT message to the UE containing the PTI (Procedure Transaction identifier) and an ESM (EPS Session Management) cause value. The PTI and an ESM cause value may indicate the following ESM cause value: #35: PTI already in use.

### Current Problem in LTE Network:

In some scenarios the network after receiving PDN DISCONNECT REQUEST message from UE, accepts the request but is not able to send response DEACTIVATE EPS BEARER CONTEXT REQUEST in appropriate time to UE. In some instance, the network is not able to send the response due to some resource issues or delay in processing the request due to requests overflow in the network side. Thus, UE not knowing whether the network has received its PDN DISCONNECT REQUEST message, re-transmits the PDN DISCONNECT REQUEST with same PTI and EPS bearer Identity as previous one, when Timer T3492 expires at UE.

Further, considering the 3GPP Spec, in the above scenario following abnormal case can be identified:
- Expiry of timer T3492:
   On the first expiry of the timer T3492, the UE shall resend the PDN DISCONNECT REQUEST and shall reset and restart timer T3492.

However, since the network might already be processing the previous PDN DISCONNECT REQUEST message, network rejects the re-transmitted PDN DISCONNECT REQUEST by sending PDN DISCONNECT REJECT with cause "PTI already in use".

Further upon receipt of the PDN DISCONNECT REJECT message at the UE, the UE shall stop the timer T3492, enters the state PROCEDURE TRANSACTION INACTIVE and abort the PDN disconnection procedure. Additionally, in all cases with the exception of the UE having received ESM cause #49 "last PDN disconnection not allowed" if EMMREGISTERED without PDN connection is not supported by the UE or the MME/Network, the UE shall deactivate all EPS bearer contexts for this PDN connection locally without peer-to-peer signalling between the UE and the MME.

Further, once the network completes the processing of the PDN DISCONNECT REQUEST previously received, it sends an unexpected DEACTIVATE EPS BEARER CONTEXT REQUEST to the UE with same PTI and EPS bearer identity as previously received in PDN DISCONNECT REQUEST. Since the PTI is already released, UE will ignore the DEACTIVATE EPS BEARER CONTEXT REQUEST from the Network. Now if User wants to use any application (using data services), UE needs to send PDN CONNECTIVITY REQUEST message to Network. However due to PDN State Mismatch between UE and Network, Network does not respond to UE and thus bearer never gets established for the respective data services. As a result both UE and Network remains in PDN State Mismatch Condition (un-synchronized state) and thus User is unable to use any application (using data services) until the user performs Airplane Mode ON/OFF or Switches OFF the UE.

Furthermore, in case of 5G network, as per the 3GPP spec, if the user does not wish to further use the data service, the user equipment requests the network for disconnection from the data service PDN by using PDU session release. The UE/user equipment shall send PDU SESSION RELEASE REQUEST message to the Network including the PDU Session identity of the session associated with the PDN which needs to be disconnected, starts the timer T3582 and enters the PDU SESSION INACTIVE PENDING state.

The UE may set the 5GSM cause value of the PDU SESSION RELEASE REQUEST message to indicate the reason for releasing the PDU session. The UE in accordance with 3GPP Spec, shall transport the PDU SESSION RELEASE REQUEST message and the PDU session ID, using the NAS transport procedure and the UE shall start timer T3582.

If network accepts the PDU SESSION RELEASE REQUEST message from UE, Network shall initiate the bearer context deactivation procedure by sending the PDU SESSION RELEASE COMMAND, starts the timer T3592 and enters the state PDU SESSION INACTIVE PENDING.

Further as per 3GPP Spec, in order to initiate the network-requested PDU session release procedure, the SMF (Session Management Function) shall create a PDU SESSION RELEASE COMMAND message. The SMF shall set the 5GSM cause value of the PDU SESSION RELEASE COMMAND message to indicate the reason for releasing the PDU session.

The SMF shall send:
a) the PDU SESSION RELEASE COMMAND message; and
b) if the SMF allows the AMF (Access and Mobility Management Function) to skip sending of

the N1 SM container to the UE and the 5GSM cause value is not set to #39 "reactivation requested",
the N1 SM delivery skip allowed indication;

towards the AMF, and the SMF shall start timer T3592.
(N1 mode - A mode of a UE allowing access to the 5G core network via the 5G access network)

Otherwise, if network does not accepts the PDU SESSION RELEASE REQUEST message from UE, the Network shall send a PDU SESSION RELEASE REJECT message to the UE containing the PTI and a 5GSM cause value.

The 5GSM cause value typically indicates the following SM cause value:
#35 PTI already in use

### Current Problem in 5G Network:

In some scenarios, the network after receiving PDU SESSION RELEASE REQUEST message from UE accepts the request but does not send PDU SESSION RELEASE COMMAND to UE. Thus, UE re-transmits the PDU SESSION RELEASE REQUEST with same PTI and PDU Session Id when Timer T3582 expires at UE and restarts timer T3582. Since the Network is already processing the previous PDU SESSION RELEASE REQUEST Message, the network rejects the said re-transmitted PDU SESSION RELEASE REQUEST by sending PDU SESSION RELEASE REJECT with cause "PTI already in use".

Further, in accordance with the 3GPP spec, in the above scenario if the SMF does not accept the request to release the PDU session, the SMF shall create a PDU SESSION RELEASE REJECT message. The SMF shall set the 5GSM cause IE of the PDU SESSION RELEASE REJECT message to indicate the reason for rejecting the PDU session release. The 5GSM cause IE typically indicates following SM cause values:
#35 PTI already in use

Further, the UE shall perform a local release of the PDU session without peer-to-peer signalling between the UE and the Network. The network then sends an unexpected PDU SESSION RELEASE COMMAND to the UE with same PTI and PDU Session Id as previously received in PDU SESSION RELEASE REQUEST. However, since the PTI is already released, thus UE ignores the PDU SESSION RELEASE COMMAND from the Network.

Now if User wants to perform some operation using data services, UE needs to send PDU SESSION ESTABLISHMENT REQUEST message to Network but due to PDN State Mismatch between UE and Network, Network does not respond to the PDU SESSION ESTABLISHMENT REQUEST from UE and thus bearer never got established for the respective data services.

Further, as a result both UE and Network remains in PDN State Mismatch Condition(un-synchronized state) and thus User will not be use any application (using data services) until the User performs Airplane Mode ON/OFF or Switches OFF the UE.

In view of these and other existing limitations, there arises an imperative need to provide a solution to overcome the limitations of prior existing solutions and to provide a more efficient method and system for optimizing PDN synchronization between user equipment and network.

"3rd Generation Partnership Project; Technical Specification Group Core Network and Terminals; Non-Access-Stratum (NAS) protocol for 5G System (5GS); Stage 3 (Release 16)", 3GPP DRAFT, XP052306815, discloses abnormal cases at the UE at the network.

CN101902732A discloses a method and a system for synchronizing EPS (Evolved Packet System) bearer context statuses. The method comprises: informing an EMM (EPS Mobility Management) module to initiate a TAU flow when an ESM (EPS Session Management) module determines that the EPS bearer context of a UE (User Equipment) side is de-activated and the EPS bearer context of a network side is activated; and initiating the TAU flow by the EMM so as to synchronize the EPS bearer context statuses of the UE side and the network side. According to the technical scheme of the invention, the bearer context statuses of the UE side and the network side can be synchronized as soon as possible so as to avoid adverse effects of unnecessary charging generated by sending redundant data on users. Document US 2019/313478 A1 (HUANG-FU CHIEN-CHUN [TW] ET AL) 10 October 2019 (2019-10-10) discloses a processing circuitry that can send one or more packet data unit (PDU) session release requests to a wireless communication network system to request a PDU session release procedure. A timer is used for the one or more PDU session release requests. The processing circuitry can determine whether a network response is received from the wireless communication network system before the timer expires and whether a number of times that the timer expires reaches a predetermined number of times. The processing circuitry can locally release the PDU session when the network response is not received and the number of times that the timer expires reaches the predefined number of times.

### SUMMARY

The invention is defined in the independent claims. Additional features of the invention are provided in the dependent claims.

### BRIEF DESCRIPTION OF DRAWINGS

The accompanying drawings, which are incorporated herein, and constitute a part of this disclosure, illustrate exemplary embodiments of the disclosed methods and systems in which like reference numerals refer to the same parts throughout the different drawings. Components in the drawings are not necessarily to scale, emphasis instead being placed upon clearly illustrating the principles of the present disclosure. Some drawings may indicate the components using block diagrams and may not represent the internal circuitry of each component. It will be appreciated by those skilled in the art that disclosure of such drawings includes disclosure of electrical components, electronic components or circuitry commonly used to implement such components.
FIG. 1 illustrates an exemplary diagram of the overall network architecture [100], in which the present disclosure is implemented, in accordance with exemplary embodiment of the present disclosure.
FIG. 2 illustrates an exemplary diagram of a user equipment [102], in accordance with exemplary embodiment of the present disclosure.
FIG. 3 illustrates an exemplary method flow diagram [300], depicting method for optimizing synchronization in a network in accordance with a first embodiment of the present disclosure.
FIG. 4 illustrates an exemplary method flow diagram [400], depicting method for optimizing PDN synchronization in a LTE network in accordance with a first embodiment of the present disclosure.
FIG. 5 illustrates an exemplary method flow diagram [500], depicting method for optimizing PDN synchronization in a 5G network, in accordance with a first embodiment of the present disclosure.
FIG. 6 illustrates an exemplary diagram of a user equipment [102], in accordance with exemplary embodiment of the present disclosure.
FIG. 7 illustrates an exemplary method flow diagram [700], depicting method for optimizing synchronization in a network, in accordance with a second embodiment of the present disclosure.
FIG. 8 illustrates an exemplary method flow diagram [800], depicting method for optimizing PDN synchronization in a LTE network, in accordance with a second embodiment of the present disclosure.
FIG. 9 illustrates an exemplary method flow diagram [900], depicting method for optimizing PDN synchronization in a 5G network, in accordance with a second embodiment of the present disclosure.

The foregoing shall be more apparent from the following more detailed description of the disclosure.

### DETAILED DESCRIPTION

In the following description, for the purposes of explanation, numerous examples have been set forth in order to provide a brief description of the disclosure. It will be apparent however, that the disclosure may be practiced without these specific details, features and examples.

The present disclosure provides a system and method of optimizing PDN synchronization between a user equipment and a LTE/5G network. In order to provide synchronization between the user equipment and the LTE network, the present disclosure encompasses transmitting from a user equipment, at a network entity, a PDN disconnect request to deactivate a PDN connectivity between said user equipment and said network entity, wherein said PDN disconnect request comprises an EPS Bearer ID and a PTI. In an instance the said PDN disconnect request is transmitted by the user equipment when the user does not wish to further use the data service for an application. The present disclosure thereafter comprises initiating, by said user equipment, a timer, wherein said timer is being initiated for a fixed interval of time. Also the user equipment resets/restarts the timer after said fixed interval of time. Thereafter the disclosure leads to re-transmitting, from said user equipment, at said network entity, the PDN disconnect request, wherein said PDN disconnect request is re-transmitted in an event no response is received from said network entity till the expiry of said timer. In response to the re-transmitted PDN disconnect request the user equipment further receives from said network entity, a PDN disconnect reject with a cause "PTI already in use".

The present disclosure further comprises deactivating an EPS Bearer Context associated with said PDN connectivity between said user equipment and said network entity, wherein said deactivation is based on said re-transmission of said PDN disconnect request for a fixed number of times. Further the disclosure comprises storing the EPS Bearer ID and the PTI, wherein said storing of EPS Bearer ID and PTI is based upon said deactivation of said EPS Bearer Context. Thereafter the disclosure further encompasses receiving from said network entity, a DEACTIVATE EPS BEARER CONTEXT REQUEST. Further the present disclosure processes said DEACTIVATE EPS BEARER CONTEXT REQUEST based on said stored EPS Bearer ID and said stored PTI. Thereafter the present disclosure comprises transmitting at said network entity, a DEACTIVATE EPS BEARER CONTEXT ACCEPT based on said processing, wherein said DEACTIVATE EPS BEARER CONTEXT ACCEPT enables said network entity to deactivate the EPS Bearer Context to synchronize the user equipment with said network entity.

Also, in order to provide synchronization between the user equipment and the 5G network, the present disclosure encompasses transmitting, from a user equipment, at a network entity, a PDU SESSION RELEASE request to deactivate a PDN connectivity between said user equipment and said network entity, wherein said PDU SESSION RELEASE request comprising a PDU session ID and a PTI. Thereafter, the disclosure comprises initiating, by said user equipment, a timer, wherein said timer is being initiated for a fixed interval of time. The disclosure further leads to re-transmitting, from said user equipment, at said network entity, the PDU SESSION RELEASE request, wherein said PDU SESSION RELEASE request is re-transmitted in an event no response is received from said network entity till the expiry of said timer. Thereafter the disclosure comprises receiving, from said network entity, at the user equipment, a PDU SESSION RELEASE reject with a cause "PTI already in use". Further the present disclosure comprises releasing, by the user equipment, a PDU session associated with said PDN connectivity between said user equipment and said network entity, wherein said releasing of PDU Session is based on said re-transmission of said PDU SESSION RELEASE request for a fixed number of times. Thereafter the disclosure comprises storing, at the user equipment, the PDU SESSION ID and the PTI, wherein said storing of PDU SESSION ID and the PTI is based upon said release of said PDU Session. Further the disclosure comprises receiving, at the user equipment from said network entity, a PDU SESSION RELEASE COMMAND. The disclosure then comprises processing, by the user equipment, said PDU SESSION RELEASE COMMAND based on stored PDU session ID and said stored PTI. Thereafter the present disclosure leads to transmitting, from the user equipment to the network entity, a PDU SESSION RELEASE COMPLETE based on said processing, wherein said PDU SESSION RELEASE COMMAND enables said network entity to release the PDU SESSION to synchronize the user equipment with said network entity.

Furthermore in one more instance, the present disclosure also in order to optimize synchronization in one of, an LTE and a 5G network encompasses receiving, from a network entity, at the user equipment, a disconnect reject information wherein said disconnect reject information is received in response of a re-transmitted disconnect request. Thereafter the present disclosure encompasses maintaining via the user equipment, at least one context data associated with a connectivity between said user equipment and said network entity. Also, the present disclosure further encompasses transmitting via said user equipment, an update, at said network entity, wherein said update comprising said at least one context data. Further said update on the basis of said at least one context data, enables the network entity to deactivate at said network entity the connectivity between the user equipment and said network entity in order to provide synchronization between the user equipment and the network entity.

As used herein, "memory unit" or "internal/external memory" or "storage unit" or "internal/external storage", refers to a machine or computer-readable medium including any mechanism for storing information in a form readable by a computer or similar machine. For example, a computer-readable medium includes read-only memory ("ROM"), random access memory ("RAM"), magnetic disk storage media, optical storage media, flash memory devices or other types of machine-accessible storage media.

As used herein, a "processing unit" or "processor" includes one or more processors, wherein processor refers to any logic circuitry for processing instructions. A processor may be a general-purpose processor, a special purpose processor, a conventional processor, a digital signal processor, a plurality of microprocessors, one or more microprocessors in association with a DSP core, a controller, a microcontroller, Application Specific Integrated Circuits, Field Programmable Gate Array circuits, any other type of integrated circuits, etc. The processor may perform signal coding data processing, input/output processing, and/or any other functionality that enables the working of the system according to the present disclosure. More specifically, the processor or processing unit is a hardware processor.

As used herein, "couple", "connect", "associate" and its cognate terms, such as "coupled", "connected", "associated" includes a physical connection (such as a conductor), a virtual connection (such as through randomly assigned memory locations of data memory device), a logical connection (such as through logical gates of semiconducting device), other suitable connections, or a combination of such connections, as may be obvious to a skilled person.

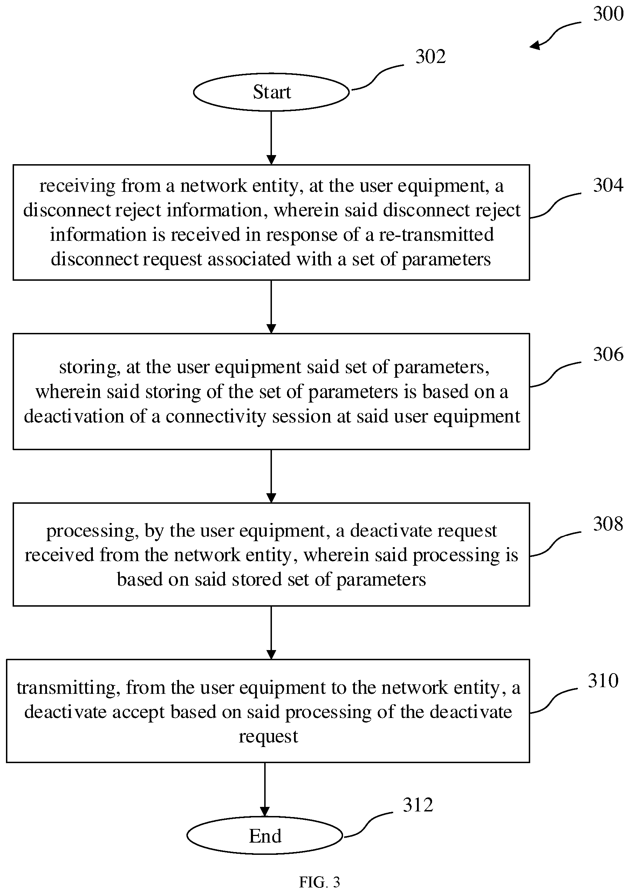

The disclosure is further explained in detail below with reference now to the diagrams. The claimed invention corresponds to fig. 3 and to the related text in the description. The remaining figures and the text of the description are intended to better explain the invention.

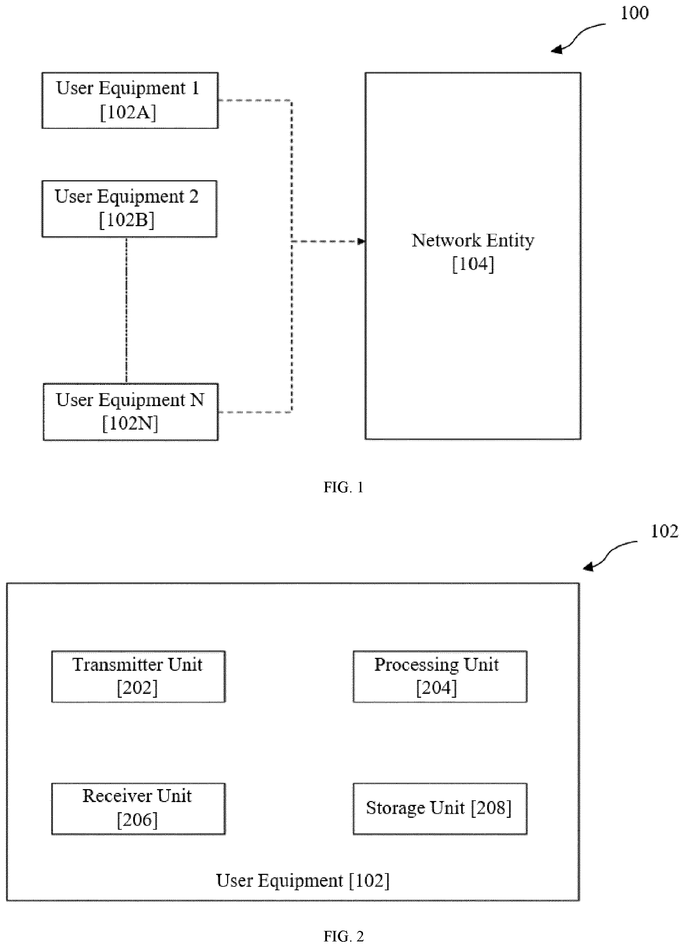

Referring to FIG. 1, an exemplary diagram of the network architecture [100], in accordance with the exemplary embodiment of the present disclosure is shown. As shown in FIG. 1, a plurality of user devices [102 A], [102 B].... [102 N] (Collectively referred to as user devices [102]) may be connected to at least one network entity [104], to enable at least one PDN connectivity between said user equipment [102] and said network entity [104] via a network (not shown in figure).

Further, as used herein, the user equipment [102] may include but not limited to any electrical, electronic, electromechanical and computing device or equipment, configured to operate in at least one of a LTE and 5G network. The user equipment may also include, but is not limited to, a mobile phone, smart phone, laptop, a general-purpose computer, desktop, personal digital assistant, tablet computer, wearable device or any other computing device which is capable of operating in at least one of a LTE and 5G network. The user equipment contains at least one input means configured to receive an input from a user, a processing unit, a storage/memory unit and the other modules/units of said electronic device.

Also, as used herein, the network entity" is a part of at least one of a LTE and/or 5G cellular network for providing voice services (calls) and the data services to the user equipment. The network entity may include, but not limited to, a base station controller, a base transceiver station, a cell site, a Node B, an eNodeB, a radio network controller, and any such unit of LTE and/or 5G network obvious to a person skilled in the art.

Although a limited number of user devices [102] and network entity [104] are shown in FIG. 1, however, it will be appreciated by those skilled in the art that the disclosure encompasses the use of multiple such user devices [102] and network entity [104], as may be necessary to implement the features of the disclosure.

FIG. 2 illustrates an exemplary diagram of a user equipment [102], in accordance with exemplary embodiment of the present disclosure. As shown in FIG. 2 the user equipment [102] comprises at least one transmitter unit [202], at least one processing unit [204], at least one receiver unit [206] and at least one storage unit [208]. Although a particular number of units/components are shown in said user equipment [102] in FIG. 2 for the purpose of clarity, however, it will be appreciated by those skilled in the art that the disclosure encompasses multiple such units as may be necessary to implement the features of the disclosure. Also all the components of said user equipment [102] shown in FIG. 2 may be connected/ coupled to each other to implement the features of the disclosure.

Furthermore, as shown in FIG. 2 the user equipment [102] is configured to optimize PDN synchronization in at least one of a LTE network and 5G network. The user equipment [102] comprises a receiver unit [206], configured to receive from a network entity [104], a disconnect reject information, wherein said disconnect reject information is received in response of a re-transmitted disconnect request associated with a set of parameters. The disconnect reject information is one of, a Packet Data Network (PDN) disconnect reject information and a PDU SESSION RELEASE reject information, in an event said network is one of the LTE network and the 5G network respectively. Further the disconnect reject information comprises a cause "PTI already in use".

Also, the disconnect request is one of, a PDN disconnect request and a PDU SESSION RELEASE request, in an event said network is one of the LTE network and the 5G network respectively. The disconnect request is transmitted via a transmitter unit [202] of the user equipment to the network entity [104] to deactivate a PDN connectivity between said user equipment [102] and said network entity [104]. Also, the transmitter unit [202] is further configured to re-transmit at the network entity [104] said disconnect request, the disconnect request is re-transmitted in an event no response is received from the network entity till expiry of a timer initiated for a fixed interval of time. Further the disconnect request is associated with a set of parameters and said set of parameters comprises one of, an Evolved Packet System (EPS) Bearer ID and a Procedure transaction identity (PTI) and a Protocol Data Unit (PDU) session ID and a PTI, in an event said network is one of the LTE network and the 5G network respectively.

The user equipment further comprises a processing unit [204] coupled to said transmitter unit [202] and said receiver unit [206]. The processing unit [204] is configured to initiate said timer for the fixed interval of time and also the processing unit [204] after expiry of said fixed interval of time restarts said timer.

The processing unit [204] further configured to deactivate the connectivity session at the user equipment [102] on the basis of re-transmission of said disconnect request for a fixed number of times.

The user equipment further comprises a storage unit [208] coupled to said processing unit [204]. The storage unit [208] is configured to store said set of parameters, wherein said storing of the set of parameters is based on the deactivation of the connectivity session at said user equipment [102].

The processing unit [204] is further configured to process a deactivate request received from the network entity, wherein said processing is based on said stored set of parameters. The processing unit [204] processes said deactivate request by matching a set of parameter associated with the deactivate request, with said stored set of parameters. Also, the deactivate request is one of, a DEACTIVATE EPS BEARER CONTEXT REQUEST and a PDU SESSION RELEASE COMMAND, in an event said network is one of the LTE network and the 5G network respectively.

The transmitter unit [202] is further configured to transmit at said network entity, a deactivate accept based on said processing of the deactivate request. Further the transmitter unit [202] transmits said deactivate accept on the basis of a successful match of said set of parameters associated with the deactivate request, with said stored set of parameters. Also, the deactivate accept is one of, a DEACTIVATE EPS BEARER CONTEXT ACCEPT and a PDU SESSION RELEASE COMPLETE, in an event said network is one of the LTE network and the 5G network respectively.

Further in an example, with respect to an implementation in a LTE network, the user equipment [102] comprises at least one transmitter unit [204] configured to transmit, to the network entity [104], a PDN disconnect request to deactivate a PDN connectivity between said user equipment [102] and said network entity [104], wherein said PDN disconnect request comprises an EPS Bearer ID and a PTI. The EPS bearer ID and PTI are unique to each session.

The user equipment [102] further comprises at least one processing unit [204] connected to said transmitter unit [202], wherein the processing unit [204] is configured to initiate a timer for a fixed interval of time. The processing unit [204] is further configured to reset/restart the timer upon expiry of said timer after said fixed interval of time.

Further the transmitter unit [204] of the user equipment [102] on the basis of said timer is further configured to re-transmit, to said network entity [104], the PDN disconnect request, wherein said PDN disconnect request is re-transmitted upon not receiving any response from said network entity [104] till expiry of said timer.

The user equipment [102] further comprises at least one receiver unit [206] connected to said transmitter unit [202] and said processing unit [204]. The receiver unit [206] is configured to receive from said network entity, a PDN disconnect reject with a cause "PTI already in use". The said PDN disconnect reject with a cause "PTI already in use" is received in response to said re-transmitted PDN disconnect request.

The processing unit [204] of the user equipment [102] is further configured to deactivate an EPS Bearer Context associated with said PDN connectivity between said user equipment [102] and said network entity [104], wherein said deactivation is based on said re-transmission of said PDN disconnect request for a fixed number of times. In an embodiment, re-transmission of said PDN disconnect request for a fixed number of times comprises repetition of said re-transmission for four times, wherein each re-transmission is based on each expiry of said timer. Furthermore, the deactivation of an EPS Bearer Context is further based on fifth expiry of said timer.

The user equipment [102] further comprises at least one storage unit [208] connected to said transmitter unit [202], processing unit [204] and receiver unit [206]. The storage unit [208] is configured to store the EPS Bearer ID and the PTI upon said deactivation of said EPS Bearer Context.

Furthermore, the receiver unit [206] of the user equipment is further configured to receive from said network entity, a DEACTIVATE EPS BEARER CONTEXT REQUEST and the processing unit [204] is further configured to process said DEACTIVATE EPS BEARER CONTEXT REQUEST based on said stored EPS Bearer ID and said stored PTI. Further said processing of said DEACTIVATE EPS BEARER CONTEXT REQUEST based on stored EPS Bearer ID and said stored PTI comprises, matching of EPS Bearer ID and PTI associated with said DEACTIVATE EPS BEARER CONTEXT REQUEST, with said stored EPS Bearer ID and said stored PTI.

Also, the transmitter unit [202] of the user equipment [102] is further configured to transmit to said network entity [104], a DEACTIVATE EPS BEARER CONTEXT ACCEPT based on said processing, wherein said DEACTIVATE EPS BEARER CONTEXT ACCEPT enables said network entity [104] to deactivate the EPS Bearer Context to synchronize the user equipment [102] with said network entity [104]. The transmission of DEACTIVATE EPS BEARER CONTEXT ACCEPT is further based on successful matching of EPS Bearer ID and PTI associated with said DEACTIVATE EPS BEARER CONTEXT REQUEST, with said stored EPS Bearer ID and said stored PTI.

Furthermore, in another example with respect to an implementation of the present disclosure in a 5G network, for optimizing PDN synchronization, the user equipment [102] comprises at least one transmitter unit [204], configured to transmit, at a network entity [104], a PDU SESSION RELEASE request to deactivate a PDN connectivity between said user equipment [102] and said network entity [104], wherein said PDU SESSION RELEASE request comprises a PDU session ID and a PTI.

The user equipment [102] further comprises at least one processing unit [204] connected to said transmitter unit [202], wherein the processing unit [204] is configured to initiate a timer, wherein said timer is being initiated for a fixed interval of time. The processing unit [204] is further configured to reset/restart the timer upon expiry of said timer after said fixed interval of time.

Further the transmitter unit [204] of the user equipment [102] on the basis of said timer is further configured to re-transmit, to said network entity [104], a PDU SESSION RELEASE request, wherein said PDU SESSION RELEASE request is re-transmitted in an event no response is received from said network entity [104] till the expiry of said timer.

The user equipment [102] further comprises at least one receiver unit [206] connected to said transmitter unit [202] and said processing unit [204]. The receiver unit [206] is configured to receive from said network entity, a PDU SESSION RELEASE reject with a cause "PTI already in use". The PDU SESSION RELEASE reject with a cause "PTI already in use", is received in response to said re-transmitted PDU SESSION RELEASE request.

The processing unit [204] of the user equipment [102] is further configured to release a PDU session associated with said PDN connectivity between said user equipment [102] and said network entity [104], wherein said releasing of PDU Session is based on said re-transmission of said PDU SESSION RELEASE request for a fixed number of times. Further, said re-transmission of said PDU SESSION RELEASE request for a fixed number of times comprises repetition of said re-transmission for four times, wherein each re-transmission is based on each expiry of said timer. Also said releasing of PDU Session is further based on fifth expiry of said timer.

The user equipment [102] further comprises at least one storage unit [208] connected to said transmitter unit [202], processing unit [204] and receiver unit [206]. The storage unit [208] is configured to store the PDU SESSION ID and the PTI, wherein said storing of PDU SESSION ID and the PTI is based upon said release of said PDU Session. Also, the processing of said PDU SESSION RELEASE COMMAND based on stored PDU session ID and said stored PTI comprises matching of PDU session ID and PTI associated with said PDU SESSION RELEASE COMMAND, with said stored PDU session ID and said stored PTI.

Further, the transmitter unit [202] of said use equipment [102] is configured to transmit at said network entity [104], a PDU SESSION RELEASE COMPLETE based on said processing, wherein said PDU SESSION RELEASE COMMAND enables said network entity [104] to release the PDU SESSION to synchronize the user equipment [102] with said network entity [104]. Also, transmission of PDU SESSION RELEASE COMPLETE is based on successful matching PDU session ID and PTI associated with said PDU SESSION RELEASE COMMAND, with said stored PDU session ID and said stored PTI.

Referring to FIG. 3, an exemplary method flow diagram [300], depicting method for optimizing synchronization in a network in accordance with a first embodiment of the present disclosure is shown.

As shown in FIG. 3, the method begins at step [302]. The method begins when the userequipment/UE [102] is already in a connected state for data transmission, and the UE [102] does not wish to avail any more data services from the network. The method further at step [304] comprises receiving from a network entity [104], a disconnect reject information, wherein said disconnect reject information is received in response of a re-transmitted disconnect request associated with a set of parameters. The disconnect reject information is one of, a PDN disconnect reject information and a PDU SESSION RELEASE reject information, in an event said network is one of the LTE network and the 5G network respectively. Further the disconnect reject information comprises a cause "PTI already in use".

Also, the disconnect request is one of, a PDN disconnect request and a PDU SESSION RELEASE request, in an event said network is one of the LTE network and the 5G network respectively. The disconnect request is transmitted to deactivate a PDN connectivity between said user equipment [102] and said network entity [104]. Also, the method encompasses re-transmitting at the network entity [104] said disconnect request, wherein the disconnect request is re-transmitted in an event no response is received from the network entity till expiry of a timer initiated for a fixed interval of time. Further the disconnect request is associated with a set of parameters and said set of parameters comprises one of, an EPS Bearer ID and a PTI and a PDU session ID and a PTI, in an event said network is one of the LTE network and the 5G network respectively.

The method further comprising initiating the timer for the fixed interval of time and also after expiry of said fixed interval of time the method further restarts said timer. Thereafter the method comprises deactivating the connectivity session at the user equipment [102] on the basis of re-transmission of said disconnect request for a fixed number of times.

Next, at step [306] the method encompasses storing, at the user equipment [102] said set of parameters, wherein said storing of the set of parameters is based on the deactivation of the connectivity session at said user equipment [102].

Next, at step [308], the method encompasses processing, by the user equipment [102], a deactivate request received from the network entity [104], wherein said processing is based on said stored set of parameters. Further, said processing encompasses matching a set of parameter associated with the deactivate request, with said stored set of parameters. Also, the deactivate request is one of, a DEACTIVATE EPS BEARER CONTEXT REQUEST and a PDU SESSION RELEASE COMMAND, in an event said network is one of the LTE network and the 5G network respectively.

Thereafter, at step [310], the method encompasses transmitting, from the user equipment [102] to the network entity [104], a deactivate accept based on said processing of the deactivate request. Further said transmitting is based on a successful match of said set of parameters associated with the deactivate request, with said stored set of parameters. Also, the deactivate accept is one of, a DEACTIVATE EPS BEARER CONTEXT ACCEPT and a PDU SESSION RELEASE COMPLETE, in an event said network is one of the LTE network and the 5G network respectively.

Further, the method terminates at step [312], after enabling synchronization between the user equipment [102] and the network entity [104].

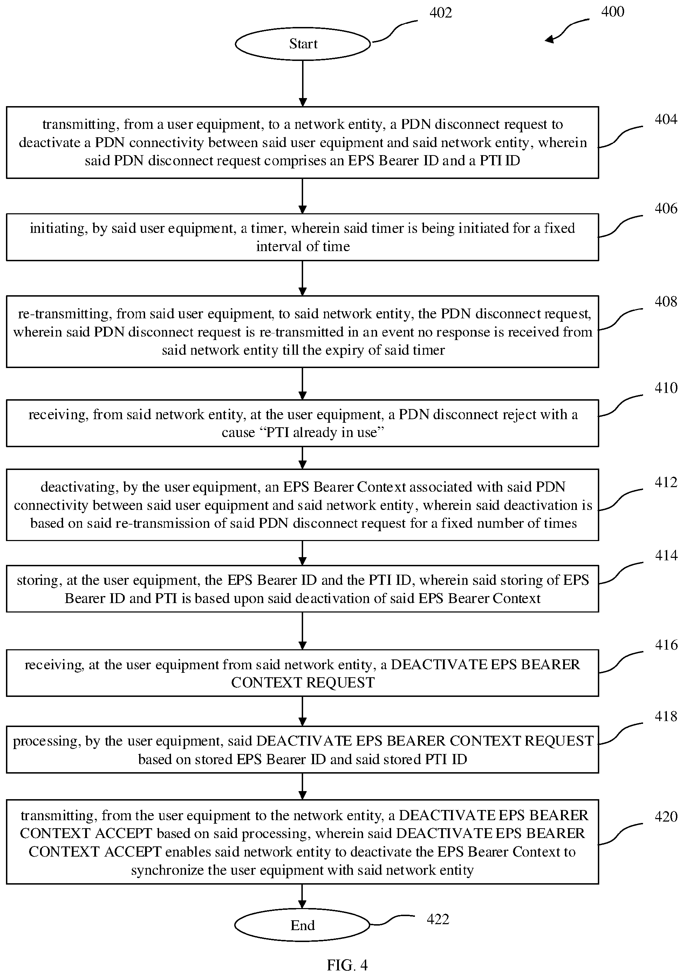

Referring to FIG. 4, an exemplary method flow diagram [400], depicting method for optimizing PDN synchronization in a LTE network is shown in accordance with a first embodiment of the present disclosure.

As shown in FIG. 4, the method begins at step [402]. The method begins when the UE [102] is already in a connected state for data transmission, and the UE [102] does not wish to avail any more data services from the network. The method further at step [404] comprises transmitting, from a user equipment [102], to a network entity [104], a PDN disconnect request to deactivate a PDN connectivity between said user equipment [102] and said network entity [104], wherein said PDN disconnect request comprises an EPS Bearer ID and a PTI.

Thereafter, the method at step [406] comprises initiating, by said user equipment [102], a timer, wherein said timer is being initiated for a fixed interval of time. The method further encompasses resetting/restarting the timer upon expiry of said timer after said fixed interval of time.

Next, at step [408] the method comprises re-transmitting, from said user equipment [102], to said network entity [104], the PDN disconnect request, wherein said PDN disconnect request is re-transmitted in an event no response is received from said network entity till the expiry of said timer.

At step [410], the method comprises receiving, from said network entity [104], at the user equipment [102], a PDN disconnect reject with a cause "PTI already in use". The said PDN disconnect reject with a cause "PTI already in use", is received in response to said re-transmitted PDN disconnect request. The network entity [104] sends such a PDN disconnect reject with a cause "PTI already in use" when the network entity [104] has already received previously a PDN disconnect request message from the UE [102] but due to any reason, such as larger processing time, the network has not yet sent back a response/ acknowledgement.

Thereafter at step [412], the method comprises deactivating, by the user equipment [102], an EPS Bearer Context associated with said PDN connectivity between said user equipment [102] and said network entity [104], i.e. the EPS bearer context is removed from the UE [102]. This deactivation is based on said re-transmission of said PDN disconnect request for a fixed number of times. Further re-transmission of said PDN disconnect request for a fixed number of times comprises repetition of said re-transmission for four times, wherein each re-transmission is based on each expiry of said timer. Also, the deactivating of an EPS Bearer Context is further based on fifth expiry of said timer.

Next, at step [414], the method comprises storing, at the user equipment [102], the EPS Bearer ID and the PTI, wherein said storing of EPS Bearer ID and PTI is based upon said deactivation of said EPS Bearer Context. Thus, once the EPS bearer context is removed, the UE [102] stored the EPS Bearer ID and the PTI of that session for which the context has been removed.

Further at step [416] the method comprises receiving, at the user equipment [102] from said network entity [104], a DEACTIVATE EPS BEARER CONTEXT REQUEST which further leads to step [418].

At step [418] the method comprises processing, by the user equipment [102], said DEACTIVATE EPS BEARER CONTEXT REQUEST based on stored EPS Bearer ID and said stored PTI. The processing said DEACTIVATE EPS BEARER CONTEXT REQUEST based on stored EPS Bearer ID and said stored PTI includes matching of EPS Bearer ID and PTI associated with said DEACTIVATE EPS BEARER CONTEXT REQUEST, with said stored EPS Bearer ID and said stored PTI.

Thereafter the method at step [420] encompasses transmitting, from the user equipment [102] to the network entity [104], a DEACTIVATE EPS BEARER CONTEXT ACCEPT based on said processing, wherein the DEACTIVATE EPS BEARER CONTEXT ACCEPT enables said network entity [104] to deactivate the EPS Bearer Context to synchronize the user equipment [102] with said network entity [104]. Also, said transmission of DEACTIVATE EPS BEARER CONTEXT ACCEPT is based on successful matching of EPS Bearer ID and PTI associated with said DEACTIVATE EPS BEARER CONTEXT REQUEST, with said stored EPS Bearer ID and said stored PTI.

Thereafter the method terminates at step [422], after enabling PDN synchronization between the user equipment [102] with the network entity [104] in the LTE network.

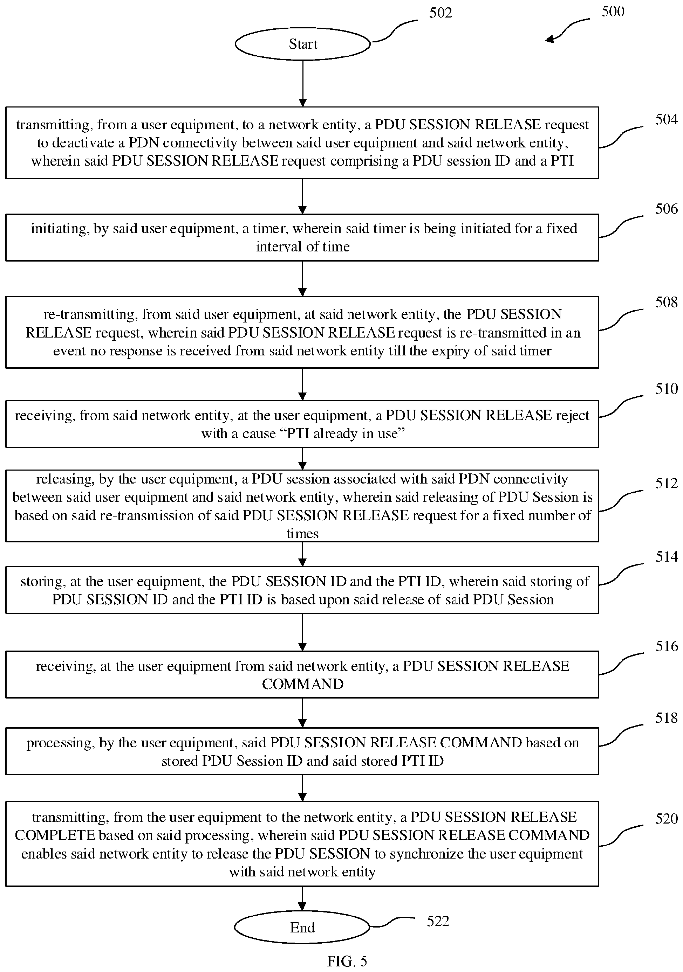

Referring to FIG. 5, an exemplary method flow diagram [500], depicting method for optimizing PDN synchronization in a 5G network, is shown in accordance with a second embodiment of the present disclosure.

As shown in FIG. 5, the method begins at step [502]. The method further at step [504] comprises transmitting, from a user equipment [102], at a network entity [104], a PDU SESSION RELEASE request to deactivate a PDN connectivity between said user equipment and said network entity, wherein said PDU SESSION RELEASE request comprising a PDU session ID and a PTI.

Thereafter the method at step [506] comprises initiating, by said user equipment [102], a timer, wherein said timer is being initiated for a fixed interval of time. The method further encompasses resetting/restarting the timer upon expiry of said timer after said fixed interval of time.

Next, at step [508] the method comprises re-transmitting, from said user equipment, at said network entity, the PDU SESSION RELEASE request, wherein said PDU SESSION RELEASE request is re-transmitted in an event no response is received from said network entity [104] till the expiry of said timer.

At step [510] the method comprises receiving, from said network entity [104], at the user equipment [102], a PDU SESSION RELEASE reject with a cause "PTI already in use". The said PDU SESSION RELEASE reject with a cause "PTI already in use" is received in response to said re-transmitted PDU SESSION RELEASE request.

Thereafter at step [512] the method comprises releasing, by the user equipment [102], a PDU session associated with said PDN connectivity between said user equipment [102] and said network entity [104], wherein said releasing of PDU Session is based on said re-transmission of said PDU SESSION RELEASE request for a fixed number of times. Further said re-transmission of said PDU SESSION RELEASE request for a fixed number of times comprises repetition of said re-transmission for four times, wherein each re-transmission is based on each expiry of said timer. Also said releasing of PDU Session is further based on fifth expiry of said timer.

Next, at step [514], the method comprises storing, at the user equipment [102], the PDU SESSION ID and the PTI, wherein said storing of PDU SESSION ID and the PTI is based upon said release of said PDU Session.

Further at step [516] the method comprises receiving, at the user equipment [102] from said network entity [104], a PDU SESSION RELEASE COMMAND with further leads to step [518].

At step [518] the method comprises processing, by the user equipment [102], said PDU SESSION RELEASE COMMAND based on stored PDU session ID and said stored PTI further comprising, matching of PDU session ID and PTI associated with said PDU SESSION RELEASE COMMAND, with said stored PDU session ID and said stored PTI. The processing said PDU SESSION RELEASE COMMAND based on stored PDU session ID and said stored PTI further comprising, matching of PDU session ID and PTI associated with said PDU SESSION RELEASE COMMAND, with said stored PDU session ID and said stored PTI.

Thereafter the method at step [520] encompasses transmitting, from the user equipment [102] to the network entity [104], a PDU SESSION RELEASE COMPLETE based on said processing, wherein said PDU SESSION RELEASE COMMAND enables said network entity [104] to release the PDU SESSION to synchronize the user equipment [102] with said network entity [104]. Also, said transmission of PDU SESSION RELEASE COMPLETE is further based on successful matching PDU session ID and PTI associated with said PDU SESSION RELEASE COMMAND, with said stored PDU session ID and said stored PTI.

Thereafter the method terminates at step [522], after enabling PDN synchronization between the user equipment [102] with the network entity [104] in the 5G network.

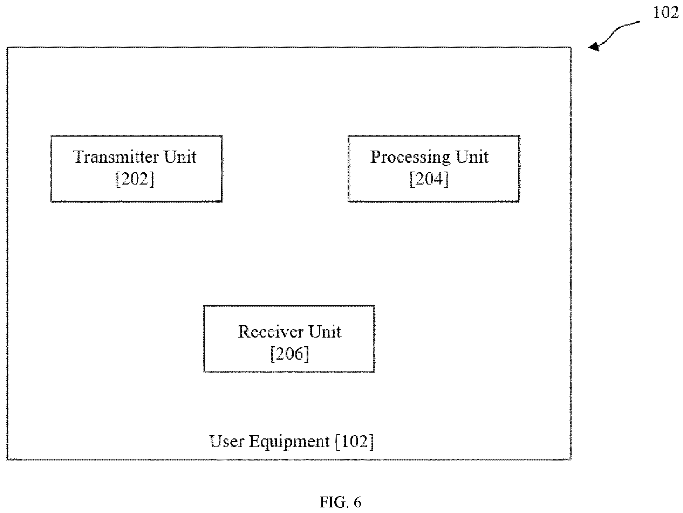

FIG. 6 illustrates an exemplary diagram of a user equipment [102], in accordance with exemplary embodiment of the present disclosure. As shown in FIG. 6 the user equipment [102] comprises at least one transmitter unit [202], at least one processing unit [204] and at least one receiver unit [206]. Although a particular number of units/components are shown in said user equipment [102] in FIG. 6 for the purpose of clarity, however, it will be appreciated by those skilled in the art that the disclosure encompasses multiple such units as may be necessary to implement the features of the disclosure. Also, in an instance, all the components of said user equipment [102] may be connected to each other to implement the features of the disclosure.

Furthermore, as shown in FIG. 6 the user equipment [102] is configured to optimize PDN synchronization in at least one of a LTE network and 5G network, in accordance with a second embodiment of the present disclosure. The user equipment [102] comprises a receiver unit [206], configured to receive from a network entity [104], a disconnect reject information, wherein said disconnect reject information is received in response of a re-transmitted disconnect request. The disconnect reject information is one of, a PDN disconnect reject information and a PDU SESSION RELEASE reject information, in an event said network is one of the LTE network and the 5G network respectively. Further the disconnect reject information comprises a cause "PTI already in use".

Also, the disconnect request is one of, a PDN disconnect request and a PDU SESSION RELEASE request, in an event said network is one of the LTE network and the 5G network respectively. The disconnect request is transmitted via a transmitter unit [202] of the user equipment to the network entity [104] to deactivate a PDN connectivity between said user equipment [102] and said network entity [104]. Also, the transmitter unit [202] is further configured to re-transmit at the network entity [104] said disconnect request, the disconnect request is re-transmitted in an event no response is received from the network entity till expiry of a timer initiated for a fixed interval of time.

The user equipment further comprises a processing unit [204] coupled to said transmitter unit [202] and said receiver unit [206]. The processing unit [204] is configured to initiate said timer for the fixed interval of time and also the processing unit [204] after expiry of said fixed interval of time restarts said timer.

The processing unit [204] further configured to deactivate the connectivity session at the user equipment [102] on the basis of re-transmission of said disconnect request for a fixed number of times.

The receiver unit [206] is further configured to receive from said network entity [104], at said user equipment [102], a deactivate request for a fixed number of times. The deactivate request is one of, a DEACTIVATE EPS BEARER CONTEXT REQUEST and a PDU SESSION RELEASE COMMAND, in an event said network is one of the LTE network and the 5G network respectively.

The processing unit [204] further configured to maintain at the user equipment [102], at least one context data associated with the connectivity between said user equipment [102] and said network entity [104].

The transmitter unit [206] is also configured to transmit a connection establishment request, wherein said connection establishment request is transmitted to establish connectivity between said user equipment [102] and said network entity [104]. Further, the connection establishment request is one of a PDN CONNECTIVITY REQUEST and a PDU SESSION ESTABLISHMENT REQUEST in case of LTE and 5G network respectively.

Also, the transmitter unit [206] is further configured to transmit an update, at said network entity [104], wherein said update comprising said context data, and said update further on the basis of said context data, enables the network entity to deactivate at said network entity [104] the connectivity between the user equipment [102] and said network entity [104]. Further, said update is one of a TRACKING AREA UPDATE and REGISTRATION REQUEST message, in an event said network is one of the LTE network and the 5G network respectively.

Further referring to an example of an implementation of user equipment [102] in a LTE network. The user equipment [102] in case of optimizing PDN synchronization in a LTE network, comprising at least one transmitter unit [204], configured to transmit, at the network entity [104], a PDN disconnect request to deactivate a PDN connectivity between said user equipment [102] and said network entity [104].

The user equipment [102] further comprises at least one processing unit [204] connected to said transmitter unit [202], wherein the processing unit [204] is configured to initiate a timer, wherein said timer is being initiated for a fixed interval of time. The processing unit [204] is further configured to reset/restart the timer upon expiry of said timer after said fixed interval of time.

Further the transmitter unit [204] of the user equipment [102] on the basis of said timer further configured to re-transmit, at said network entity [104], the PDN disconnect request, wherein said PDN disconnect request is re-transmitted upon not receiving any response from said network entity till expiry of said timer.

The user equipment [102] further comprises at least one receiver unit [206] connected to said transmitter unit [202] and said processing unit [204]. The receiver unit [206] is configured to receive from said network entity, a PDN disconnect reject with a cause "PTI already in use". The said PDN disconnect reject with a cause "PTI already in use" is received in response to said re-transmitted PDN disconnect request.

The processing unit [204] of the user equipment [102] further configured to deactivate an EPS Bearer Context associated with said PDN connectivity between said user equipment and said network entity, wherein said deactivation is based on said re-transmission of said PDN disconnect request for a fixed number of times. Further the re-transmission of said PDN disconnect request for a fixed number of times comprises repetition of said re-transmission for four times, wherein each re-transmission is based on each expiry of said timer. Furthermore the deactivation of an EPS Bearer Context is further based on fifth expiry of said timer.

Thereafter the receiver unit [206] is further configured to receive from said network entity [102], a DEACTIVATE EPS BEARER CONTEXT REQUEST for a fixed number of times and the processing unit [204] is further configured to maintain a context data at the user equipment. The said context data includes but not limited to an EPS bearer context status IE.

Further the transmitter unit [202] is further configured to transmit a PDN CONNECTIVITY REQUEST on the basis of said transmission of PDN CONNECTIVITY REQUEST, at said network entity, wherein said PDN CONNECTIVITY REQUEST is transmitted to establish a PDN connectivity between said user equipment [102] and said network entity [104]. The transmission of PDN CONNECTIVITY REQUEST for a fixed number of times comprises transmitting said PDN CONNECTIVITY REQUEST for four times.

The transmitter unit [202] is also configured to transmit a TRACKING AREA UPDATE, at said network entity [104], wherein said TRACKING AREA UPDATE comprising said context data, and said TRACKING AREA UPDATE further on the basis of said context data, enables the network entity [104] to deactivate at said network entity [104] the EPS Bearer Context to synchronize the user equipment [102] with said network entity [104].

Furthermore, referring to another example of an implementation of user equipment [102] in a 5G network. In said 5G network, the user equipment for optimizing PDN synchronization, comprises at least one transmitter unit [204], configured to transmit, at the network entity [104], a PDU SESSION RELEASE request to deactivate a PDN connectivity between said user equipment [102] and said network entity [104].

The user equipment [102] further comprising a processing unit [204] connected to said transmitter unit [202], the processing unit [204] is configured to initiate a timer, wherein said timer is being initiated for a fixed interval of time. Also the processing unit further comprising resetting/restarting the timer upon expiry of said timer after said fixed interval of time.

Further said transmitter unit [202], further configured to re-transmit, at said network entity [104], the PDU SESSION RELEASE request, wherein said PDU SESSION RELEASE request is re-transmitted in an event no response is received from said network entity [104] till the expiry of said timer.

The user equipment [102] comprises a receiver unit [206] connected to said transmitter unit [202] and processing unit [204], the receiver unit [206] is configured to receive from said network entity [104], a PDU SESSION RELEASE reject with a cause "PTI already in use". The PDN disconnect reject with a cause "PTI already in use", is received in response to said re-transmitted PDN disconnect request.

Further the processing unit [204], further configured to release a PDU session associated with said PDN connectivity between said user equipment [102] and said network entity [104], wherein said releasing of PDU Session is based on said re-transmission of said PDU SESSION RELEASE request for a fixed number of times. The re-transmission of said PDU SESSION RELEASE request for a fixed number of times comprises repetition of said re-transmission for four times, wherein each re-transmission is based on each expiry of said timer. Also the releasing of PDU Session is further based on fifth expiry of said timer.

Thereafter the receiver unit [206] is further configured to receive from said network entity [104], a PDU SESSION RELEASE COMMAND for a fixed number of times and the processing unit [204], further configured to maintain a context data at the user equipment [102]. The context data may include but not limited to PDU session status IE. Further the transmission of PDU SESSION ESTABLISHMENT REQUEST for a fixed number of times comprises transmitting said PDU SESSION ESTABLISHMENT REQUEST for four times.

Further the transmitter unit [202] is further configured to transmit a PDU SESSION ESTABLISHMENT REQUEST, at said network entity [102], wherein said PDU SESSION ESTABLISHMENT REQUEST is transmitted to establish a PDN connectivity between said user equipment [102] and said network entity [104]. The transmitter unit [202] is also configured to transmit a REGISTRATION REQUEST message based on said PDU SESSION ESTABLISHMENT REQUEST, at said network entity [104], wherein said REGISTRATION REQUEST message further comprising said context data and on the basis of said context data, enables the network entity [104] to release at said network entity [104] the PDU session to synchronize the user equipment [102] with said network entity [104].

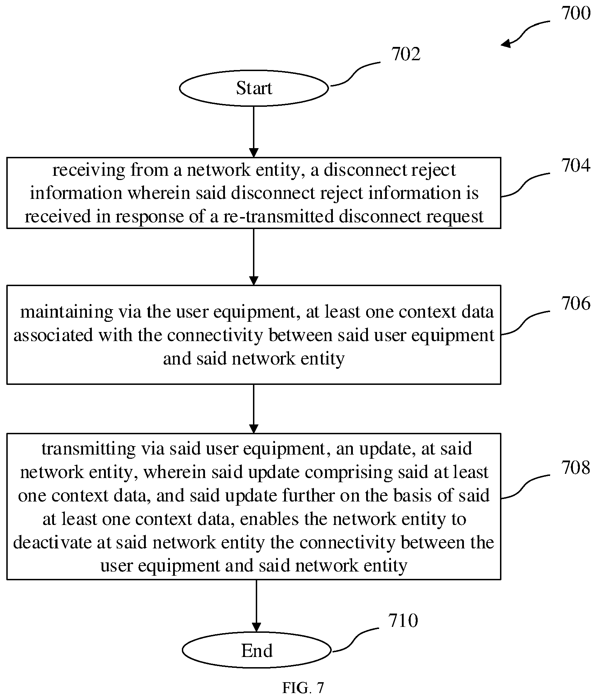

Referring to FIG. 7, an exemplary method flow diagram [700], depicting method for optimizing synchronization in a network, in accordance with a second embodiment of the present disclosure is shown.

As shown in FIG. 7, the method begins at step [702]. The method begins when the user-equipment/UE [102] is already in a connected state for data transmission, and the UE [102] does not wish to avail any more data services from the network. The method further at step [704] comprises receiving from a network entity [104], a disconnect reject information, wherein said disconnect reject information is received in response of a re-transmitted disconnect request. The disconnect reject information is one of, a PDN disconnect reject information and a PDU SESSION RELEASE reject information, in an event said network is one of the LTE network and the 5G network respectively. Further the disconnect reject information comprises a cause "PTI already in use".

Also, the disconnect request is one of, a PDN disconnect request and a PDU SESSION RELEASE request, in an event said network is one of the LTE network and the 5G network respectively. The disconnect request is transmitted to deactivate a PDN connectivity between said user equipment [102] and said network entity [104]. Also, the method encompasses re-transmitting at the network entity [104] said disconnect request, wherein the disconnect request is re-transmitted in an event no response is received from the network entity till expiry of a timer initiated for a fixed interval of time.

The method further comprising initiating the timer for the fixed interval of time and also after expiry of said fixed interval of time the method further restarts said timer. Thereafter the method comprises deactivating the connectivity session at the user equipment [102] on the basis of re-transmission of said disconnect request for a fixed number of times.

The method further comprising receiving at the user equipment [102] from the network entity [104], a deactivate request for a fixed number of times. The deactivate request is one of, a DEACTIVATE EPS BEARER CONTEXT REQUEST and a PDU SESSION RELEASE COMMAND, in an event said network is one of the LTE network and the 5G network respectively.

Next, at step [706] the method encompasses maintaining via the user equipment [102], at least one context data associated with the connectivity between said user equipment [102] and said network entity [104].

Also, the method further encompasses transmitting via said user equipment [102], a connection establishment request, wherein said connection establishment request is transmitted to establish connectivity between said user equipment [102] and said network entity [104]. Further, the connection establishment request is one of a PDN CONNECTIVITY REQUEST and a PDU SESSION ESTABLISHMENT REQUEST in case of LTE and 5G network respectively.

Next, at step [708], the method encompasses transmitting via said user equipment [102], an update, at said network entity [104], wherein said update comprising said at least one context data, and said update further on the basis of said at least one context data, enables the network entity [104] to deactivate at said network entity [104] the connectivity between the user equipment [102] and said network entity [104]. Further, said update is one of, a TRACKING AREA UPDATE and a REGISTRATION REQUEST message, in an event said network is one of the LTE network and the 5G network respectively.

Further, the method terminates at step [710], after enabling synchronization between the user equipment [102] and the network entity [104].

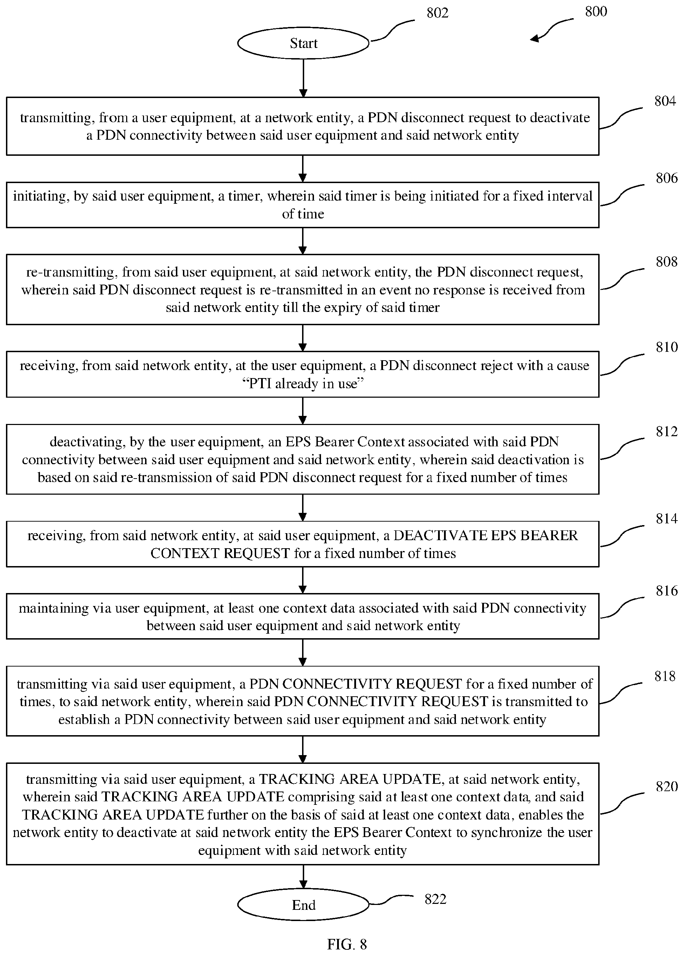

Referring to FIG. 8, an exemplary method flow diagram [800], depicting method for optimizing PDN synchronization in a LTE network is shown in accordance with second exemplary embodiment of the present disclosure.

As shown in FIG. 8, the method begins at step [802]. The method further at step [804] comprises transmitting, from a user equipment [102], at a network entity [104], a PDN disconnect request to deactivate a PDN connectivity between said user equipment [102] and said network entity [104].

Thereafter the method at step [806] comprises initiating, by said user equipment [102], a timer, wherein said timer is being initiated for a fixed interval of time. The method further encompasses resetting/restarting the timer upon expiry of said timer after said fixed interval of time.

Next, at step [808] the method comprises re-transmitting, from said user equipment [102], at said network entity [104], the PDN disconnect request, wherein said PDN disconnect request is re-transmitted in an event no response is received from said network entity till the expiry of said timer.

At step [810] the method comprises receiving, from said network entity [104], at the user equipment [102], a PDN disconnect reject with a cause "PTI already in use". The said PDN disconnect reject with a cause "PTI already in use", is received in response to said re-transmitted PDN disconnect request.

Thereafter at step [812] the method comprises deactivating, by the user equipment [102], an EPS Bearer Context associated with said PDN connectivity between said user equipment [102] and said network entity [104], wherein said deactivation is based on said re-transmission of said PDN disconnect request for a fixed number of times. Further re-transmission of said PDN disconnect request for a fixed number of times comprises repetition of said re-transmission for four times, wherein each re-transmission is based on each expiry of said timer. Also, the deactivating of an EPS Bearer Context is further based on fifth expiry of said timer.

Further the method at step [814] comprises receiving, from said network entity [104], at said user equipment [102], a DEACTIVATE EPS BEARER CONTEXT REQUEST for a fixed number of times.

Thereafter the method at step [816] comprises maintaining via user equipment [102], at least one context data associated with said PDN connectivity between said user equipment [102] and said network entity [104]. The said context data includes but not limited to an EPS bearer context status IE.

The method further at step [818] comprises transmitting via said user equipment [102], a PDN CONNECTIVITY REQUEST for a fixed number of times, to said network entity [104], wherein said PDN CONNECTIVITY REQUEST is transmitted to establish a PDN connectivity between said user equipment [102] and said network entity [104]. In an embodiment, the PDN CONNECTIVITY REQUEST for a fixed number of times comprises transmitting said PDN CONNECTIVITY REQUEST for four times.

Further the method at step [820] comprises transmitting via said user equipment [102], a TRACKING AREA UPDATE, at said network entity [104], wherein said TRACKING AREA UPDATE comprising said at least one context data, and said TRACKING AREA UPDATE further on the basis of said at least one context data, enables the network entity [104] to deactivate at said network entity [104] the EPS Bearer Context to synchronize the user equipment [102] with said network entity [104]. Furthermore, the transmission of TRACKING AREA UPDATE is based on said transmission of PDN CONNECTIVITY REQUEST.

Thereafter the method terminates at step [822], after enabling PDN synchronization between the user equipment [102] with the network entity [104] in the LTE network.

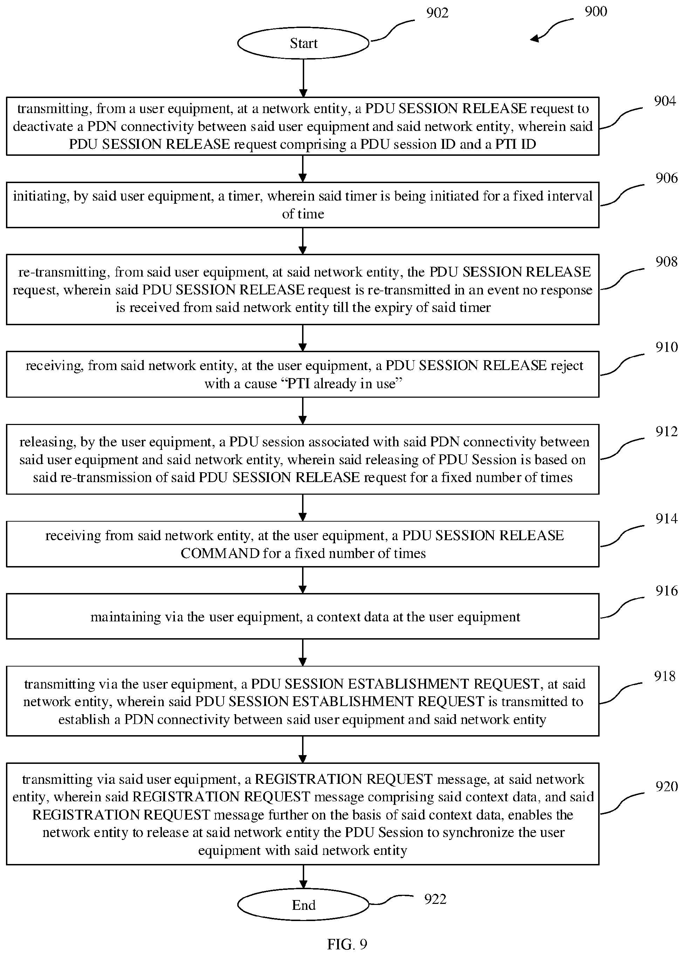

Referring to FIG. 9, an exemplary method flow diagram [900], depicting method for optimizing PDN synchronization in a 5G network, is shown in accordance with second exemplary embodiment of the present disclosure.

As shown in FIG. 9, the method begins at step [902]. The method further at step [904] comprises transmitting, from a user equipment [102], at a network entity [104], a PDU SESSION RELEASE request to deactivate a PDN connectivity between said user equipment [102] and said network entity [104].

Thereafter the method at step [906] comprises initiating, by said user equipment [102], a timer, wherein said timer is being initiated for a fixed interval of time. The method further encompasses resetting/restarting the timer upon expiry of said timer after said fixed interval of time.

Next, at step [908] the method comprises re-transmitting, from said user equipment [102], at said network entity [104], the PDU SESSION RELEASE request, wherein said PDU SESSION RELEASE request is re-transmitted in an event no response is received from said network entity [104] till the expiry of said timer.

At step [910] the method comprises receiving, from said network entity [104], at the user equipment [102], a PDU SESSION RELEASE reject with a cause "PTI already in use". The said PDU SESSION RELEASE reject with a cause "PTI already in use" is received in response to said re-transmitted PDU SESSION RELEASE request.

Thereafter at step [912] the method comprises releasing, by the user equipment [102], a PDU session associated with said PDN connectivity between said user equipment [102] and said network entity [104], wherein said releasing of PDU Session is based on said re-transmission of said PDU SESSION RELEASE request for a fixed number of times. Further said re-transmission of said PDU SESSION RELEASE request for a fixed number of times comprises repetition of said re-transmission for four times, wherein each re-transmission is based on each expiry of said timer. Also said releasing of PDU Session is further based on fifth expiry of said timer.

Further the method at step [914] comprises, receiving from said network entity [104], at the user equipment [102], a PDU SESSION RELEASE COMMAND for a fixed number of times.

The method then at step [916] encompasses maintaining via the user equipment [102], a context data at the user equipment, wherein the context data may include but not limited to PDU session status IE.

Thereafter the method at step [918] comprises transmitting via the user equipment [102], a PDU SESSION ESTABLISHMENT REQUEST, at said network entity [104], wherein said PDU SESSION ESTABLISHMENT REQUEST is transmitted to establish a PDN connectivity between said user equipment [102] and said network entity [104]. The said transmission of PDU SESSION ESTABLISHMENT REQUEST for a fixed number of times comprises transmitting said PDU SESSION ESTABLISHMENT REQUEST for four times.

The method then at step [920] leads to transmitting via said user equipment [102], a REGISTRATION REQUEST message, at said network entity [104], wherein said REGISTRATION REQUEST message comprising said context data, and said REGISTRATION REQUEST message further on the basis of said context data, enables the network entity [104] to release at said network entity [104] the PDU Session to synchronize the user equipment [102] with said network entity [104]. Also the transmission of REGISTRATION REQUEST message is based on said transmission of PDU SESSION ESTABLISHMENT REQUEST.

Thereafter the method terminates at step [922], after enabling PDN synchronization between the user equipment [102] with the network entity [104] in the 5G network.

While considerable emphasis has been placed herein on the disclosed embodiments, it will be appreciated that many embodiments can be made and that many changes can be made to the embodiments without departing from the principles of the present disclosure. These and other changes in the embodiments of the present disclosure will be apparent to those skilled in the art, whereby it is to be understood that the foregoing descriptive matter to be implemented is illustrative and non-limiting.

## Claims

1. A user equipment (102) for optimizing synchronization of a network, wherein the user equipment (102) comprises:
a receiver unit (206), configured to receive from a network entity (104), a disconnect reject information, wherein said disconnect reject information is received in response of a re-transmitted disconnect request associated with a set of parameters;
a storage unit (208), configured to store said set of parameters, wherein said storing of the set of parameters is based on a deactivation of a connectivity session at said user equipment (102); **characterized in**
a processing unit (204), configured to process a deactivate request received from the network entity (104), wherein said processing is based on said stored set of parameters; and
a transmitter unit (202), configured to transmit at said network entity (104), a deactivate accept based on said processing of the deactivate request.

2. The user equipment (102) as claimed in claim 1, wherein said network is one of an LTE network and a 5G network.

3. The user equipment (102) as claimed in claim 1, wherein the transmitter unit (202) configured to re-transmit at the network entity (104) the disconnect request, the disconnect request is re-transmitted in an event no response is received from the network entity (104) till expiry of a timer initiated for a fixed interval of time.

4. The user equipment (102) as claimed in claim 1, wherein the processing unit (204) is configured to deactivate the connectivity session at the user equipment (102) on the basis of re-transmission of said disconnect request for a fixed number of times.

5. The user equipment (102) as claimed in claim 1, wherein the set of parameters comprises one of, an Evolved Packet System, EPS, Bearer ID and a Procedure transaction identity, PTI, and a Protocol Data Unit, PDU, session ID and a PTI, in an event said network is one of the LTE network and the 5G network respectively.

6. The user equipment (102) as claimed in claim 1, wherein the processing unit (204) is configured to process the deactivate request by matching a set of parameters associated with the deactivate request, with said stored set of parameters.

7. The user equipment (102) as claimed in claim 1, wherein transmitter unit (202) is configured to transmit said deactivate accept on the basis of a successful match of said set of parameters associated with the deactivate request, with said stored set of parameters.

8. The user equipment (102) as claimed in claim 1, wherein said disconnect reject information is one of, a Packet Data Network, PDN, disconnect reject information and a PDU SESSION RELEASE reject information, in an event said network is one of the LTE network and the 5G network respectively.

9. The user equipment (102) as claimed in claim 1, wherein said disconnect request is one of, a PDN disconnect request and a PDU SESSION RELEASE request, in an event said network is one of the LTE network and the 5G network respectively.

10. The user equipment (102) as claimed in claim 1, wherein said deactivate request is one of, a DEACTIVATE EPS BEARER CONTEXT REQUEST and a PDU SESSION RELEASE COMMAND, in an event said network is one of the LTE network and the 5G network respectively.

11. The user equipment (102) as claimed in claim 1, wherein said deactivate accept is one of, a DEACTIVATE EPS BEARER CONTEXT ACCEPT and a PDU SESSION RELEASE COMPLETE, in an event said network is one of the LTE network and the 5G network respectively.

12. A method (300) for optimizing synchronization of a network, wherein the method comprises:
receiving (304), from a network entity (104), at a user equipment (102), a disconnect reject information, wherein said disconnect reject information is received in response of a re-transmitted disconnect request associated with a set of parameters;
storing (306), at the user equipment (102) said set of parameters, wherein said storing of the set of parameters is based on a deactivation of a connectivity session at said user equipment (102); **characterized in that** the method further comprises:
processing (308), by the user equipment (102), a deactivate request received from the network entity (104), wherein said processing is based on said stored set of parameters; and
transmitting (310), from the user equipment (102) to the network entity (104), a deactivate accept based on said processing of the deactivate request.

13. The method as claimed in claim 12, wherein said network is one of an LTE network and 5G network.

## Patentansprüche

1. Benutzereinrichtung (102) zum Optimieren der Synchronisation eines Netzes, wobei die Benutzereinrichtung (102) umfasst:
eine Empfängereinheit (206), die dazu ausgelegt ist, von einer Netzentität (104) eine Trennungszurückweisungsinformation zu empfangen, wobei die Trennungszurückweisungsinformation in Reaktion auf eine erneut übertragene Trennungsanforderung empfangen wird, die mit einem Satz von Parametern verknüpft ist;
eine Datenspeichereinheit (208), die dazu ausgelegt ist, den Satz von Parametern zu speichern, wobei das Speichern des Satzes von Parametern auf einer Deaktivierung einer Konnektivitätssitzung an der Benutzereinrichtung (102) basiert; **gekennzeichnet dadurch, dass**
eine Verarbeitungseinheit (204) dazu ausgelegt ist, eine Deaktivierungsanforderung zu verarbeiten, die von der Netzentität (104) empfangen wird, wobei die Verarbeitung auf dem gespeicherten Satz von Parametern basiert; und
eine Sendereinheit (202) dazu ausgelegt ist, an der Netzentität (104) eine Deaktivierungsakzeptanz basierend auf der Verarbeitung der Deaktivierungsanforderung zu übertragen.

2. Benutzereinrichtung (102) nach Anspruch 1, wobei das Netz eines von einem LTE-Netz und einem 5G-Netz ist.

3. Benutzereinrichtung (102) nach Anspruch 1, wobei die Sendereinheit (202) dazu ausgelegt ist, an der Netzentität (104) die Trennungsanforderung erneut zu übertragen, wobei die Trennungsanforderung erneut übertragen wird, für den Fall, dass keine Antwort von der Netzentität (104) empfangen wird, bis ein für ein festes Zeitintervall initiierter Timer abläuft.

4. Benutzereinrichtung (102) nach Anspruch 1, wobei die Verarbeitungseinheit (204) dazu ausgelegt ist, die Konnektivitätssitzung an der Benutzereinrichtung (102) auf Basis einer Neuübertragung der Trennungsanforderung für eine feste Anzahl von Malen zu deaktivieren.

5. Benutzereinrichtung (102) nach Anspruch 1, wobei der Satz von Parametern eines von einer Trägerkennung (Bearer ID) für weiterentwickelte Paketsysteme (Evolved Packet Systems, EPS) und einer Prozedurtransaktionsidentität (Procedure Transaction Identity, PTI) und einer Protokolldateneinheit (Protocol Data Unit, PDU)-Sitzungskennung (Session ID) und einer PTI umfasst, für den Fall, dass das Netz eines von dem LTE-Netz bzw. dem 5G-Netz ist.

6. Benutzereinrichtung (102) nach Anspruch 1, wobei die Verarbeitungseinheit (204) dazu ausgelegt ist, die Deaktivierungsanforderung zu verarbeiten, indem ein Satz von Parametern, der mit der Deaktivierungsanforderung verknüpft ist, mit dem gespeicherten Satz von Parametern abgeglichen wird.

7. Benutzereinrichtung (102) nach Anspruch 1, wobei die Sendereinheit (202) dazu ausgelegt ist, die Deaktivierungsakzeptanz zu übertragen, basierend darauf, dass der Satz von Parametern, der mit der Deaktivierungsanforderung verknüpft ist, erfolgreich mit dem gespeicherten Satz von Parametern abgeglichen wird.

8. Benutzereinrichtung (102) nach Anspruch 1, wobei die Trennungszurückweisungsinformation eines von einer PDN (Packet Data Network) -Trennungszurückweisungsinformation und einer PDU-Sitzungsfreigabe (PDU SESSION RELEASE)-Zurückweisungsinformation ist, für den Fall, dass das Netz eines von dem LTE-Netz bzw. dem 5G-Netz ist.

9. Benutzereinrichtung (102) nach Anspruch 1, wobei die Trennungsanforderung eines von einer PDN-Trennungsanforderung und einer PDU-Sitzungsfreigabeanforderung (PDU SESSION RELEASE REQUEST) ist, für den Fall, dass das Netz eines von dem LTE-Netz bzw. dem 5G-Netz ist.

10. Benutzereinrichtung (102) nach Anspruch 1, wobei die Deaktivierungsanforderung eines von einer Anforderung zum Deaktivieren eines EPS-Trägerkontextes (DEACTIVATE EPS BEARER CONTEXT REQUEST) und einem PDU-Sitzungsfreigabebefehl (PDU SESSION RELEASE COMMAND) ist, für den Fall, das Netz eines von dem LTE-Netz bzw. dem 5G-Netz ist.

11. Benutzereinrichtung (102) nach Anspruch 1, wobei die Deaktivierungsakzeptanz eines von einer Akzeptanz der Deaktivierung eines EPS-Trägerkontextes (DEACTIVATE EPS BEARER CONTEXT ACCEPT) und einem PDU-Sitzungsfreigabeabschluss (PDU SESSION RELEASE COMPLETE) ist, für den Fall, das Netz eines von dem LTE-Netz bzw. dem 5G-Netz ist.

12. Verfahren (300) zum Optimieren einer Synchronisation eines Netzes, wobei das Verfahren umfasst:
Empfangen (304), von einer Netzentität (104), an einer Benutzereinrichtung (102), einer Trennungszurückweisungsinformation, wobei die Trennungszurückweisungsinformation in Reaktion auf eine erneut übertragene Trennungsanforderung empfangen wird, die mit einem Satz von Parametern verknüpft ist;
Speichern (306), an der Benutzereinrichtung (102) des Satzes von Parametern, wobei das Speichern des Satzes von Parametern auf einer Deaktivierung einer Konnektivitätssitzung an der Benutzereinrichtung (102) basiert;
**dadurch gekennzeichnet, dass** das Verfahren ferner umfasst: Verarbeiten (308), durch die Benutzereinrichtung (102), einer Deaktivierungsanforderung, die von der Netzentität (104) empfangen wird, wobei die Verarbeitung auf dem gespeicherten Satz von Parametern basiert; und
Übertragen (310), von der Benutzereinrichtung (102) an die Netzentität (104), einer Deaktivierungsakzeptanz basierend auf der Verarbeitung der Deaktivierungsanforderung.

13. Verfahren nach Anspruch 12, wobei das Netz eines von einem LTE-Netz und einem 5G-Netz ist.

## Revendications

1. Équipement d'utilisateur (102) permettant d'optimiser la synchronisation d'un réseau, dans lequel l'équipement d'utilisateur (102) comprend :
une unité de réception (206), configurée pour recevoir à partir d'une entité de réseau (104), une information de rejet de déconnexion, dans lequel ladite information de rejet de déconnexion est reçue en réponse à une demande de déconnexion retransmise associée à un ensemble de paramètres ;
une unité de stockage (208), configurée pour stocker ledit ensemble de paramètres, dans lequel ledit stockage de l'ensemble de paramètres est basé sur une désactivation d'une session de connectivité au niveau dudit équipement d'utilisateur (102) ; caractérisé en
une unité de traitement (204), configurée pour traiter une demande de désactivation reçue à partir de l'entité de réseau (104), dans lequel ledit traitement est basé sur ledit ensemble de paramètres stocké ; et
une unité de transmission (202), configurée pour transmettre au niveau de ladite entité de réseau (104), une acceptation de désactivation basée sur ledit traitement de la demande de désactivation.

2. Équipement d'utilisateur (102) selon la revendication 1, dans lequel ledit réseau est un réseau LTE ou un réseau 5G.

3. Équipement d'utilisateur (102) selon la revendication 1, dans lequel l'unité de transmission (202) est configurée pour retransmettre au niveau de l'entité de réseau (104) la demande de déconnexion, la demande de déconnexion étant retransmise si aucune réponse n'est reçue à partir de l'entité de réseau (104) jusqu'à l'expiration d'un temporisateur initié pendant un intervalle de temps fixe.

4. Équipement d'utilisateur (102) selon la revendication 1, dans lequel l'unité de traitement (204) est configurée pour désactiver la session de connectivité au niveau de l'équipement d'utilisateur (102) sur la base de la retransmission de ladite demande de déconnexion pendant un nombre fixe de fois.

5. Équipement d'utilisateur (102) selon la revendication 1, dans lequel l'ensemble de paramètres comprend l'un parmi un ID de support de système de paquets évolué, EPS, et une identité de transaction de procédure, PTI, et un ID de session d'unité de données de protocole, PDU, et une PTI, dans le cas où ledit réseau est l'un parmi le réseau LTE et le réseau 5G, respectivement.

6. Équipement d'utilisateur (102) selon la revendication 1, dans lequel l'unité de traitement (204) est configurée pour traiter la demande de désactivation en faisant correspondre un ensemble de paramètres associé à la demande de désactivation avec ledit ensemble de paramètres stocké.

7. Équipement d'utilisateur (102) selon la revendication 1, dans lequel l'unité de transmission (202) est configurée pour transmettre ladite acceptation de désactivation sur la base d'une correspondance réussie entre ledit ensemble de paramètres associé à la demande de désactivation et ledit ensemble de paramètres stocké.

8. Équipement d'utilisateur (102) selon la revendication 1, dans lequel ladite information de rejet de déconnexion est l'une parmi une information de rejet de déconnexion de réseau de données par paquets, PDN, et une information de rejet de LIBÉRATION DE SESSION PDU, dans le cas où ledit réseau est l'un parmi le réseau LTE et le réseau 5G, respectivement.

9. Équipement d'utilisateur (102) selon la revendication 1, dans lequel ladite demande de déconnexion est l'une parmi une demande de déconnexion PDN et une demande de LIBÉRATION DE SESSION PDU, dans le cas où ledit réseau est l'un parmi le réseau LTE et le réseau 5G, respectivement.

10. Équipement d'utilisateur (102) selon la revendication 1, dans lequel ladite demande de désactivation est l'une parmi une DEMANDE DE DÉSACTIVATION DU CONTEXTE DU SUPPORT EPS et une COMMANDE DE LIBÉRATION DE SESSION PDU, dans le cas où ledit réseau est l'un parmi le réseau LTE et le réseau 5G, respectivement.

11. Équipement d'utilisateur (102) selon la revendication 1, dans lequel ladite acceptation de désactivation est l'une parmi une ACCEPTATION DE DÉSACTIVATION DU CONTEXTE DU SUPPORT EPS et une LIBÉRATION DE SESSION PDU TERMINÉE, dans le cas où ledit réseau est l'un parmi le réseau LTE et le réseau 5G, respectivement.

12. Procédé (300) permettant d'optimiser la synchronisation d'un réseau, dans lequel le procédé comprend :
la réception (304), à partir d'une entité de réseau (104), au niveau d'un équipement d'utilisateur (102), d'une information de rejet de déconnexion, dans lequel ladite information de rejet de déconnexion est reçue en réponse à une demande de déconnexion retransmise associée à un ensemble de paramètres ;
le stockage (306), au niveau de l'équipement d'utilisateur (102), dudit ensemble de paramètres, dans lequel ledit stockage de l'ensemble de paramètres est basé sur une désactivation d'une session de connectivité au niveau dudit équipement d'utilisateur (102) ;
**caractérisé en ce que** le procédé comprend en outre :
le traitement (308), par l'équipement d'utilisateur (102), d'une demande de désactivation reçue à partir de l'entité de réseau (104), dans lequel ledit traitement est basé sur ledit ensemble de paramètres stocké ; et
la transmission (310), à partir de l'équipement d'utilisateur (102) à l'entité de réseau (104), d'une acceptation de désactivation basée sur ledit traitement de la demande de désactivation.

13. Procédé selon la revendication 12, dans lequel ledit réseau est l'un parmi un réseau LTE et un réseau 5G.
